# FASCICULE DE BREVET EUROPEEN

(11) **EP 4 185 522 B1**
(45) Date de publication et mention de la délivrance du brevet: **28.08.2024**
(21) Numéro de dépôt: 21755007.8
(22) Date de dépôt: 15.07.2021
(51) Int. Cl.: B64C 11/06, F04D 29/32, F04D 29/34, F04D 29/64

(54) **TURBOMACHINE D'AERONEF COMPORTANT DES AUBES D'HELICE A CALAGE VARIABLE**
FLUGZEUGTURBINENTRIEBWERK MIT VERSTELLPROPELLERSCHAUFELN
AIRCRAFT TURBINE ENGINE COMPRISING VARIABLE-PITCH PROPELLER BLADES

(30) Priorité: 24.07.2020 FR 2007809; 24.07.2020 FR 2007812; 30.03.2021 FR 2103263
(43) Date de publication de la demande: 31.05.2023
(73) Titulaire: SAFRAN AIRCRAFT ENGINES, 75015 Paris (FR)
(72) Inventeur: COTTET, Clément, 77550 MOISSY-CRAMAYEL (FR); COURTIER, Vivien Mickaël, 77550 MOISSY-CRAMAYEL (FR); JOUDON, Vincent, 77550 MOISSY-CRAMAYEL (FR); SERVANT, Régis Eugène Henri, 77550 MOISSY-CRAMAYEL (FR); JABLONSKI, Laurent, 77550 MOISSY-CRAMAYEL (FR)
(74) Mandataire: Gevers & Orès
(86) Numéro de dépôt international: PCT/FR2021/051316
(87) Numéro de publication internationale: WO 2022/018359

(56) Documents cités:
- DE-A1- 4 203 205
- FR-A1- 3 017 163
- GB-A- 718 127
- US-A1- 2016 272 299
- US-A1- 2018 290 728

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'état de la technique comprend notamment les documents DE4203205 A1, GB718127A et FR3017163A1.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un système de calage angulaire permettant de modifier l'angle de calage des aubes afin d'adapter la poussée générée par l'hélice en fonction des différentes phases de vol.

L'introduction d'un système de calage angulaire de l'aube implique de prévoir un dispositif de sécurité appelé système de rappel en drapeau, aussi connu sous sa dénomination anglaise de "feathering system". Ce système permet de ramener l'aube dans un angle de calage de sécurité dit "en drapeau" ("feather" en anglais) qui minimise la trainée aérodynamique en cas de défaillance du système de calage angulaire, La défaillance peut par exemple être une rupture d'un élément de la chaine cinématique, une panne de l'actionnement, etc.

Un tel dispositif de sécurité est requis car une pale d'hélice qui fonctionne à un calage non prévu peut dégrader le fonctionnement moteur. Elle peut par exemple induire une perte de rendement mais également réduire l'opérabilité. Dans certains cas, une aube occupant un angle de calage non adapté aux conditions de vol peut même générer une trainée excessive qui rend l'aéronef incontrôlable. C'est pourquoi une telle trainée excessive est classée dans la catégorie des effets dangereux ("hazardous propeller effects") par le "Certification Spécification for Propellers", un règlement publié par l'Agence européenne de la sécurité aérienne (EASA, en anglais l'European Aviation Safety Agency).

Si on assimile une pale d'hélice à une plaque plane, l'angle de calage en drapeau est tel que l'aube est alignée avec l'axe moteur (corde parallèle à l'axe moteur). Cependant, une pale d'hélice présente généralement un vrillage naturel. Le calage angulaire en drapeau est alors déterminé en une section particulière de la pale dont la corde sera alignée avec l'axe moteur, par exemple une section prise à environ 75% de la longueur de la pale en partant du moyeu.

Les dispositifs de sécurité pour rappeler automatiquement la pale en drapeau peuvent être divers : il existe des systèmes mécaniques par contrepoids, des systèmes hydrauliques, etc. La solution la plus courante est l'agencement d'un contrepoids fixé à l'aube à une position angulaire bien définie qui permet, par un effet d'inertie avec la vitesse de rotation de l'hélice, de ramener l'aube dans son angle de calage dit "en drapeau".

On connaît aussi des systèmes de contrepoids déportés. Dans ce cas, le couple de rappel engendré par le contrepoids est transmis à l'aube par l'intermédiaire d'une chaîne cinématique, par exemple par engrenages. L'ajout de contrepoids peut d'ailleurs permettre de réduire la puissance de l'actionneur du système de calage angulaire.

Lorsque le contrepoids n'est pas fixé sur l'aube, le couple de rappel vers l'angle de calage en drapeau est transmis par des pièces formant une chaîne cinématique. Par conséquent, en cas de rupture d'une de ces pièces intermédiaires, la capacité de rappel en drapeau est perdue.

L'invention vise à trouver une solution pour faire face à une situation de perte de contrôle de l'angle de calage de l'aube en cas de rupture d'un élément de la chaîne cinématique entre l'aube et l'actionneur du système de calage et/ou entre l'aube et le dispositif de sécurité.

### Résumé de l'invention

L'invention propose un ensemble comportant une aube d'hélice et un système de calage angulaire de l'aube autour d'un axe de calage, pour une turbomachine d'aéronef, l'aube présentant un pied s'étendant depuis une extrémité supérieure liée à une pale de l'aube jusqu'à une extrémité inférieure libre, le système de calage angulaire de l'aube comportant un bol qui est délimité radialement par une paroi annulaire s'étendant autour de l'axe de calage, le bol comportant une paroi de fond et une ouverture supérieure par laquelle le pied est destiné à être inséré axialement dans le bol, l'extrémité inférieure libre du pied étant emboîtée axialement dans un logement complémentaire de la paroi de fond pour lier en rotation autour de l'axe de calage le bol et l'aube.

L'ensemble selon l'invention est caractérisé en ce que le pied de l'aube comporte au moins une première face radiale de limitation qui est destinée à coopérer avec au moins une première face radiale de butée associée du bol pour limiter la rotation de l'aube dans un premier sens autour de l'axe de calage par rapport au bol en cas de rupture de l'extrémité inférieure du pied.

Ceci permet d'assurer un deuxième chemin pour la transmission du couple de commande de calage angulaire de l'aube en cas de rupture de l'extrémité inférieure libre qui assure normalement cette fonction.

Selon une caractéristique optionnelle, le pied de l'aube comporte au moins une deuxième face radiale de limitation qui est destinée à coopérer avec au moins une deuxième face radiale de butée associée du bol pour limiter la rotation de l'aube dans un deuxième sens autour de l'axe de calage par rapport au bol en cas de rupture de l'extrémité inférieure du pied.

Cela permet de commander la rotation de l'aube autour de son axe de calage dans les deux sens en cas de rupture de l'extrémité inférieure libre du pied.

Selon une autre caractéristique optionnelle, un espace angulaire est réservé entre chaque face radiale de limitation et sa face de butée associée lorsque l'aube est liée en rotation au bol par l'intermédiaire de son extrémité inférieure libre.

Ceci permet de garantir un montage facile de l'aube dans le bol. En outre, cela permet de garantir qu'en fonctionnement normal, le couple de commande de calage angulaire de l'aube passe uniquement par l'extrémité inférieure du pied.

Selon une autre caractéristique optionnelle, l'espace angulaire est compris entre 2° et 10°, de préférence l'espace angulaire est égal à 5°.

Cela permet de conférer un jeu suffisant pour le montage de l'aube tout en limitant le débattement angulaire de l'aube dans le bol en cas de rupture de l'extrémité inférieure du pied.

Selon une autre caractéristique optionnelle, l'ensemble comporte des moyens de rétention pour fixer axialement le pied dans le bol.

Selon une autre caractéristique optionnelle, le pied présente un tronçon renflé, appelé "bulbe", qui est agencé axialement entre la pale et l'extrémité inférieure libre, le système de calage comportant une bague d'immobilisation annulaire qui est configurée pour être montée à l'intérieur du bol et pour coopérer respectivement avec le bulbe et la paroi annulaire du bol afin de solidariser axialement le pied avec le bol.

Selon une autre caractéristique optionnelle, les faces de butée et les faces de limitation sont agencées axialement au-dessous de la bague d'immobilisation.

Selon une autre caractéristique de l'invention, les faces de limitation sont agencées sensiblement au niveau auquel le bulbe présente des dimensions radiales maximales.

Selon une autre caractéristique optionnelle, le pied comporte un corps logé dans un fût annulaire préalablement à son insertion dans le bol, chaque face de limitation étant formée en une pièce avec le fût.

Selon une autre caractéristique optionnelle, l'au moins une première face de limitation et l'au moins une deuxième face de limitation sont agencées sur un doigt commun de limitation qui fait saillie radialement vers l'extérieur par rapport au pied.

Selon une autre caractéristique optionnelle, le doigt de limitation est reçu dans une encoche de butée associée du bol qui est délimitée circonférentiellement par une première face de butée et par une deuxième face de butée.

Selon une autre caractéristique optionnelle, un espace radial est réservé entre le doigt de limitation et la face interne de la paroi annulaire du bol.

Selon une autre caractéristique optionnelle, l'au moins une première face de butée et l'au moins une deuxième face de butée sont agencées en opposition sur un doigt commun de butée qui fait saillie radialement vers l'intérieur par rapport à la paroi annulaire du bol.

Selon une autre caractéristique optionnelle, le doigt de butée est reçu dans une encoche de limitation associée du pied qui est délimitée circonférentiellement par une première face de limitation et par une deuxième face de limitation.

Selon une autre caractéristique optionnelle, un espace radial est réservé entre le doigt de butée et le pied.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une vue schématique en perspective d'une aube d'hélice pour une turbomachine d'aéronef, et illustre la présente invention,
La figure 2 est une vue à plus grande échelle d'une partie de la figure 1 et montre le pied de l'aube,
La figure 3 est une vue en coupe axiale selon le plan de coupe 3-3 de la figure 4 qui représente le pied de l'aube de la figure 1 fixé dans un bol d'un système de calage,
La figure 4 est une vue en coupe transversale selon le plan de coupe Pb de la figure 3 qui représente la forme et la position de l'extrémité inférieure libre du pied par rapport à l'axe de calage,
La figure 5 est une vue en couple axiale prise selon le plan de coupe 5-5 de la figure 4,
La figure 6 est une vue similaire à celle de la figure 3 qui représente une variante de réalisation du système de calage,
La figure 7 est une vue de principe en coupe selon le plan de coupe Pm de la figure 3 qui représente schématiquement un premier mode de réalisation de l'invention dans lequel le pied de l'aube comporte un doigt de limitation reçu dans une encoche de butée du bol,
La figure 8 est une vue similaire à celle de la figure 7 qui représente schématiquement un deuxième mode de réalisation de l'invention dans lequel le pied de l'aube comporte une encoche de limitation dans laquelle est reçu un doigt de butée du bol,
La figure 9 est une vue à plus grande échelle représentant la partie indiquée dans la fenêtre 9 de la figure 3 faisant apparaître une face de limitation du pied et une face de butée du bol,
La figure 10 est une vue similaire à celle de la figure 2 qui représente une variante de réalisation du pied de l'aube dans lequel le pied est équipé d'un fût,
La figure 11 est une vue éclaté du pied de la figure 10 représentant les deux demi-coquilles du fût,
La figure 12 est une vue en coupe selon le plan de coupe Pm de la figure 3 qui représente le premier mode de réalisation de l'invention appliqué au pied de la figure 10,
La figure 13 est une vue en coupe selon le plan de coupe Pm de la figure 3 qui représente le deuxième mode de réalisation de l'invention appliqué au pied de la figure 10.

### Description détaillée de l'invention

Dans la suite de la description, des éléments présentant une structure identique ou des fonctions analogues seront désignés par une même référence.

Dans la suite de la description, on adoptera à titre non limitatif une orientation axiale dirigée selon l'axe "A" de calage de l'aube, du bas, à proximité du pied de l'aube, vers le haut, à proximité de l'extrémité libre de l'aube. On adoptera aussi des directions radiales s'étendent orthogonalement à l'axe de calage depuis l'intérieur, à proximité de l'axe de calage, vers l'extérieur. On adoptera aussi une direction circonférentielle dirigée le long d'un arc de cercle centré sur l'axe "A" de calage. La direction circonférentielle est ainsi orthogonale aux directions radiales et axiale.

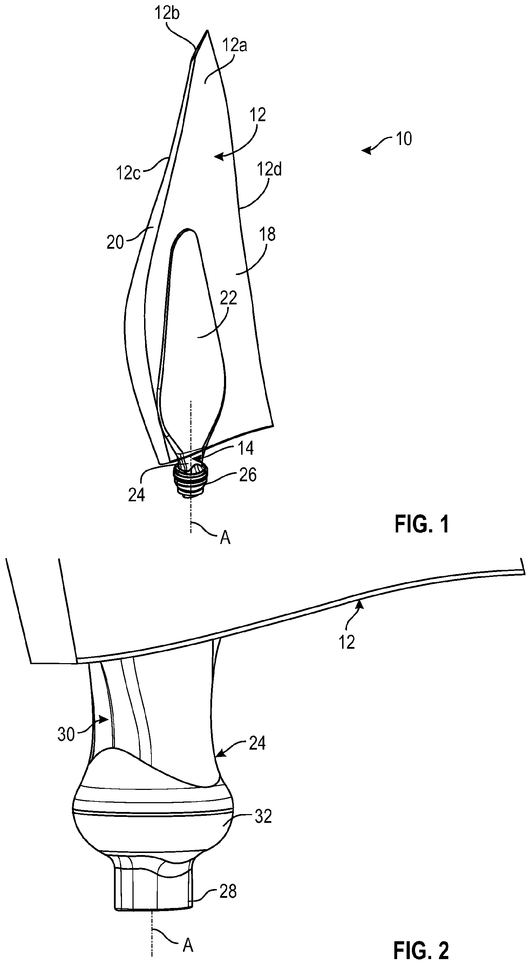

La figure 1 montre une aube 10 pour une hélice d'une turbomachine d'aéronef, cette hélice étant carénée ou non carénée. A titre d'exemple, l'hélice est ici non carénée.

L'aube 10 comprend une pale 12 qui s'étend globalement selon l'axe "A" et qui est reliée à un pied 14. L'axe "A" est un axe d'allongement de l'aube 10 et de la pale 12 et en particulier un axe "A" de calage de l'aube 10, c'est-à-dire l'axe autour duquel l'angle de calage de l'aube 10 est ajusté. C'est en général aussi un axe qui s'étend suivant un rayon par rapport à l'axe de rotation de l'hélice équipée de cette aube 10.

La pale 12 présente un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale 12 en fonctionnement. On détermine la corde d'une section de pale 12, prise orthogonalement à l'axe "A" de calage, comme étant une droite qui relie le bord d'attaque au bord de fuite.

La pale 12 présente une extrémité supérieure libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais *Resin Transfer Molding*). Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22. Le longeron 22 comprend une partie formant une âme de la pale 12. La partie du longeron 22 formant l'âme de la pale 12 est destinée à être insérée dans la préforme 18 avant l'injection de résine. Le longeron 22 comprend aussi une partie qui s'étend du côté opposé au sommet de la pale 12 pour former le pied 14.

Le longeron 22 est préférentiellement en matériau composite. Il s'agit par exemple d'un matériau composite à matrice organique époxy renforcée par fibres de carbone tissées 3D avec la direction chaîne majoritairement orientée axialement selon l'axe "A" de calage et la trame majoritairement orientée selon la corde de la pale 12 à hauteur de veine aérodynamique.

En variante, le longeron peut également être formé par un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprend une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale 12 à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

Le pied 14 comporte un corps 24 qui a une forme particulière mieux visible à la figure 2. Le corps 24 est ici réalisé en une pièce avec le longeron 22. Le corps 24 comprend pour l'essentiel trois parties à savoir :
- une extrémité 28 inférieure libre située du côté opposé à la pale 12,
- une échasse 30 supérieure située du côté de la pale 12, et
- un tronçon renflé, appelé "bulbe" 32, situé entre l'extrémité 28 libre et l'échasse 30.

Le corps 24 est de préférence plein, c'est-à-dire qu'il est exempt de partie creuse évidée.

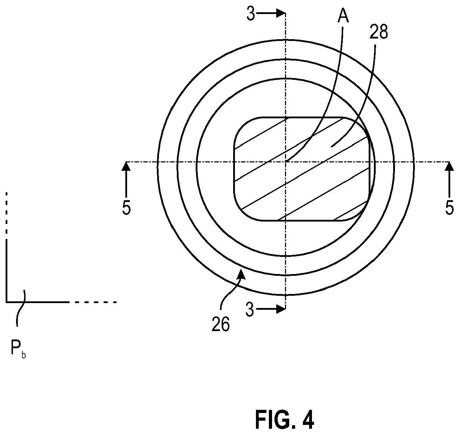

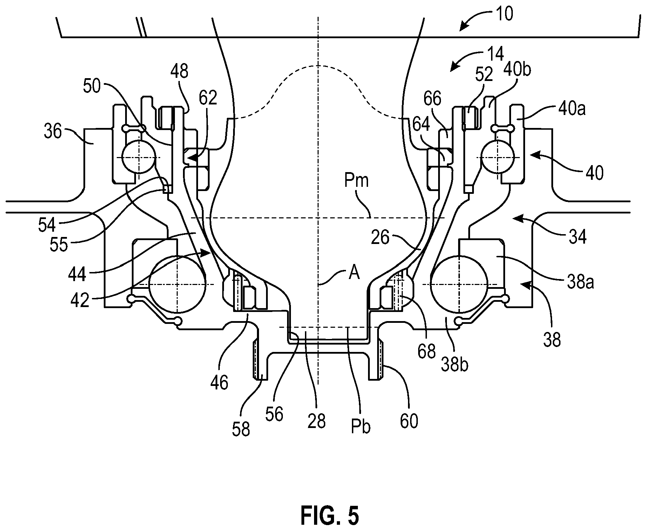

L'extrémité 28 libre a une forme générale de section non circulaire, ici de forme polygonale. Comme illustré aux figures 4 et 5, cette extrémité 28 inférieure libre est désaxée ou décalée par rapport à l'axe "A" de calage pour réaliser un détrompage ou indexage, comme cela sera expliqué plus en détail dans ce qui suit.

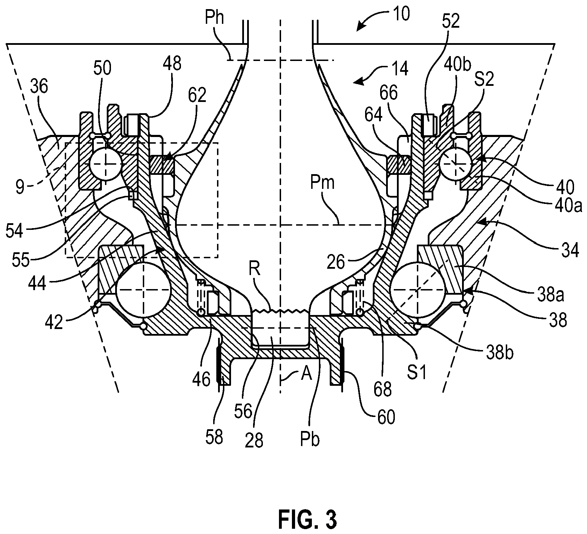

En se référant à la figure 3, on définit Pb comme un plan transversal, c'est-à-dire un plan perpendiculaire à l'axe "A" de calage, passant sensiblement par le milieu de l'extrémité 28 inférieure libre, mesurée le long de l'axe "A" de calage. Ce plan Pb est appelé plan bas ou inférieur. La figure 4 montre la forme en section de l'extrémité 28 inférieure libre dans ce plan Pb. Cette section, appelée section basse, présente une valeur ou une aire, par exemple maximale et présente une forme générale rectangulaire dans l'exemple représenté.

Comme cela sera également décrit dans ce qui suit, l'extrémité 28 inférieure libre est configurée pour coopérer avec un système 34 de calage angulaire de l'aube 10.

En se reportant à nouveau à la figure 2, l'échasse 30 présente une forme relativement complexe qui permet de faire la transition entre le pied 14 et la partie de longeron 22 formant l'âme de la pale 12. En référence à la figure 3, on définit Ph comme un plan transversal passant par l'échasse 30, et en particulier son tronçon inférieur. Ce plan Ph est appelé plan haut ou supérieur. Dans ce plan, l'échasse 30 peut avoir en section une forme non circulaire et par exemple ovale, oblongue, carrée ou rectangulaire. Cette section, appelée section haute, a une valeur ou une aire, par exemple maximale.

Le bulbe 32 a une forme générale renflée ou bombée, ce renflement ou bombement s'étendant tout autour de l'axe "A" de calage.

On définit Pm comme un plan médian passant par le bulbe 32, et en particulier dans sa partie de plus grande section transversale, appelée par la suite section milieu. Ce plan Pm est appelé plan moyen. Dans ce plan, le bulbe 32 peut avoir en section une forme circulaire bien que cette section ne soit pas limitative.

On comprend que le plan Pm est situé entre les plans Pb et Ph. Les dimensions maximales de la section transversale du bulbe 32 décroissent du plan Pm jusqu'au plan Ph, ainsi que depuis le plan Pm, jusque vers le plan Pb.

L'aube 10 est destinée à être montée dans un système 34 de calage angulaire permettant de modifier son angle de calage autour de l'axe "A" de calage par rapport à un moyeu 36 de l'hélice. On définit l'angle de calage comme étant l'angle que forme la corde d'une section déterminée, par exemple une section située à 75% de la longueur de la pale 12 mesurée depuis le pied 14, par rapport à l'axe de rotation de l'hélice (non représenté). Un angle de calage de 0° sera par la suite appelée angle de calage "en drapeau".

A cet effet, le système 34 de calage angulaire comporte des paliers 38, 40. Les paliers 38, 40 sont ici au nombre de deux et sont respectivement un palier inférieur 38 et un palier 40 supérieur.

Les paliers 38, 40 sont du type à roulement à billes. Dans l'exemple représenté, ils ont des diamètres différents et leurs billes ont également des diamètres différents.

Le palier 38 inférieur s'étend sensiblement entre les plans Pm et Pb et donc autour d'une partie inférieure du bulbe 32. Ce palier 38 inférieur présente un diamètre plus petit que le palier 40 supérieur, et ses billes ont un diamètre supérieur à celles du palier 40 supérieur.

Le palier 38 inférieur est en outre à contact oblique. Dans l'exemple représenté, les points ou surfaces d'appui des billes sur les chemins de roulement de leurs bagues 38a, 38b sont situés sur une surface tronconique S1 qui s'étend le long de l'axe "A" de calage et dont le plus grand diamètre est situé du côté du sommet de l'aube 10.

Le palier 40 supérieur s'étend sensiblement entre les plans Pm et Ph et donc autour d'une partie supérieure du bulbe 32. Le palier 40 supérieur est en outre à contact oblique. Dans l'exemple représenté, les points ou surfaces d'appui des billes sur les chemins de roulement de leurs bagues 40a, 40b sont situés sur une surface tronconique S2 qui s'étend le long de l'axe "A" de calage et dont le plus grand diamètre est situé du côté de l'extrémité 28 inférieure libre du pied 14 de l'aube 10.

La figure 3 illustre un exemple de réalisation du système 34 de calage angulaire.

Le système 34 de calage angulaire comprend un bol 42 formant un pivot de calage autour de l'axe "A" de l'aube 10 par rapport au moyeu. Le bol 42 comporte une paroi 44 annulaire s'étendant autour de l'axe "A" de calage. La paroi 44 annulaire délimite radialement un volume interne du bol 42. Le volume interne du bol 42 est fermé par une paroi 46 de fond qui s'étend en regard de l'extrémité 28 libre du pied. Le bol 42 présente à son extrémité axiale supérieure une ouverture 48 qui est délimitée radialement par un bord d'extrémité supérieur de la paroi 44 annulaire. L'extrémité 28 inférieure libre et le bulbe 32 du pied 14 sont destinés à être insérés axialement à l'intérieur du bol 42 par l'ouverture 48 supérieure.

La paroi 44 annulaire et la paroi 46 de fond sont réalisées en une seule pièce.

Comme on le voit à la figure 3, le bol 42 est conçu pour supporter les paliers 38, 40 qui assurent le centrage et le guidage du bol 42 autour de l'axe "A" de calage vis-à-vis d'un moyeu 36 de la turbomachine.

Les paliers 38, 40 peuvent faire partie du système 34 de calage angulaire. En particulier, au moins l'un des paliers 38, 40 de guidage peut avoir sa bague interne qui est intégrée au bol 42. C'est ici le cas du palier inférieur 38 qui a sa bague interne 38b intégrée au bol 42. En pratique, cela signifie que le bol 42 comprend un chemin de roulement à sa périphérie externe sur laquelle roule directement les billes du palier 38 inférieur. Ce chemin de roulement comprend une surface annulaire à section incurvée concave. Ce chemin de roulement est ici située à l'extrémité inférieure du bol 42 et de la paroi 44 annulaire. La bague externe 38a du palier 38 est fixée au moyeu 36, par exemple par frettage. Par ailleurs, le bol 42 est avantageusement conçu pour appliquer une précontrainte au palier 38.

La bague externe 40a du palier 40 est fixée au moyeu 36, par exemple par frettage. Sa bague interne 40b est engagée sur et autour de l'extrémité supérieure libre du bol 42 et de la paroi 44 annulaire. Cette extrémité de la paroi 44 annulaire comprend une surface cylindrique externe 50 de montage de la bague interne 40b ainsi qu'un filetage externe de vissage d'un écrou 52 destiné à prendre appui axialement sur la bague interne 40b pour la maintenir serrée axialement contre un épaulement cylindrique externe 54 du bol 42.

Avantageusement, une cale 55 est intercalée axialement entre la bague interne 40b et l'épaulement cylindrique externe 54. Cette cale 55 est destinée à compenser les tolérances de fabrication du moyeu 36 en ajustant la position de la bague interne 40b. Ceci permet notamment d'appliquer une précharge optimale sur le palier inférieure 38 de roulement lors du serrage de l'écrou 52.

La paroi 46 de fond du bol 42 est configurée pour coopérer par complémentarité de formes avec l'extrémité 28 inférieure libre du pied 14 de façon à ce que le bol 42 soit solidarisé en rotation avec le pied 14 autour de l'axe "A" de calage.

Dans le cas présent, on comprend que la paroi 46 de fond comprend un logement 56 ayant une section transversale complémentaire de celle de l'extrémité 28 inférieure libre du pied 14. La section transversale du logement 56 présente ainsi une forme non circulaire, et en particulier rectangulaire. Le logement 56 est ainsi configuré pour recevoir l'extrémité 28 inférieure libre, comme illustré aux figures 3, 4 et 5. Comme on le voit aux figures 4 et 5, ce logement 56 est excentré par rapport à l'axe "A" de calage de façon analogue à l'extrémité 28 inférieure libre. Cet excentrement permet un indexage et un détrompage lors de l'insertion et du montage du pied 14 dans le bol 42, une seule position d'engagement de l'extrémité 28 inférieure libre dans le logement 56 étant possible.

Le logement 56 est situé sur une face supérieure ou interne de la paroi 46 de fond du bol 42, qui est donc située à l'intérieur du bol 42 et orientée du côté du pied 14.

Le système 34 de calage angulaire génère un couple au pied 14 d'aube 10 qui s'oppose au moment de torsion issu des efforts aérodynamiques et des efforts centrifuges. Il est avantageux d'emboîter directement l'extrémité 28 inférieure libre dans le logement 56, sans interposition d'un élément rapporté, afin de contraindre directement la rotation du pied 14. On obtient ainsi un chemin d'effort plus direct, le moment de torsion s'appliquant directement sur le pied 14.

La paroi 46 de fond comprend une face inférieure ou externe, qui est située du côté opposé au pied 14, et qui comprend un prolongement cylindrique 58 s'étendant le long de l'axe "A" de calage et comportant un filetage externe ou des cannelures rectilignes externes 60 pour l'accouplement en rotation du système 34 de calage angulaire avec un actionneur qui permet de commander l'angle de calage par l'intermédiaire d'un mécanisme de transmission qui n'est pas illustré.

Le système 34 de calage angulaire comporte en outre des moyens de rétention pour fixer axialement le pied 14 dans le bol 42. A cet effet, le système 34 de calage angulaire comporte ici une bague 62 d'immobilisation annulaire qui est configurée pour être montée à l'intérieur du bol 42 et pour coopérer respectivement avec le bulbe 32 et la paroi 44 annulaire du bol 42 afin de retenir axialement le pied 14 dans le bol 42. La bague 62 d'immobilisation permet uniquement de solidariser axialement le pied 14 avec le bol 42, le pied 14 est solidarisé en rotation avec le bol 42 par l'emboîtement de son extrémité 28 inférieure libre dans le logement 56.

A titre d'exemple non limitatif, dans le mode de réalisation de la figure 3, cette bague 62 d'immobilisation est une bague 62 de crabotage qui comporte des dents externes 64 de crabot configurées pour coopérer avec des dents internes 66 de crabot complémentaires de la paroi 44 annulaire du bol 42. Il est prévu un organe 68 élastique intercalé entre le pied 14 et la paroi 46 de fond du bol 42 pour contraindre le pied 14 contre la bague 62 d'immobilisation qui est elle-même poussée contre les dents 66 internes de crabot du bol 42 afin de procurer l'immobilisation axiale du pied 14 dans le bol 42.

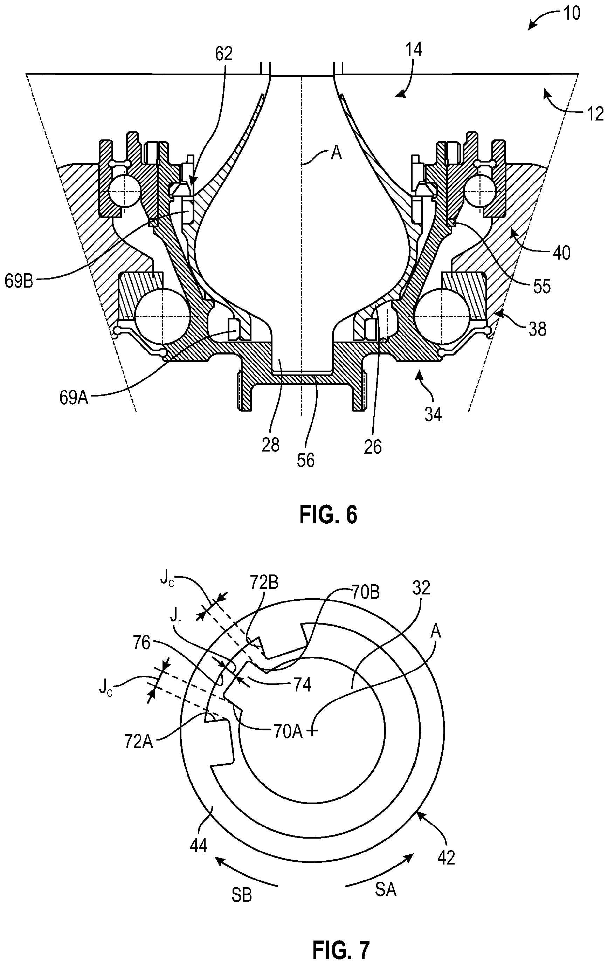

En variante de réalisation de la bague 62 d'immobilisation représentée à la figure 6, celle-ci présente en section transversale une forme de coin et est configurée, sous l'effet des forces centrifuges en fonctionnement, pour être sollicitée axialement vers l'extérieur du bol 42 et pour maintenir serré axialement le pied 14 d'aube 10 par effet de coin.

Il peut arriver que l'actionneur du système 34 de calage angulaire soit défaillant. En ce cas, il est prévu un dispositif de sécurité (non représenté) permettant de rappeler les aubes 10 dans leur angle de calage "en drapeau" de manière à limiter les effets de la traînée sur les aubes 10, et ainsi permettre au pilote de garder la maîtrise de l'aéronef.

A titre d'exemple non limitatif, le dispositif de sécurité comporte un contrepoids monté mobile autour d'un axe et qui, sous l'effet de la rotation de l'hélice, est constamment rappelé vers une position de sécurité correspondant à l'angle de calage en drapeau de l'aube 10. Le contrepoids engendre ainsi un couple de rappel autour de son axe de rotation. En fonctionnement normal du système 34 de calage angulaire, l'actionneur présente une puissance suffisante pour surmonter le couple de rappel et commander ainsi l'aube 10 dans un angle de calage souhaité.

L'agencement du pied 14 dans le bol 42 ne permet pas de disposer d'un espace suffisant pour fixer directement le contrepoids sur le pied 14 de l'aube 10. Le contrepoids est donc fixé à l'extérieur du bol 42. Le contrepoids peut être monté à rotation autour d'un axe différent de celui de l'axe "A" de calage ou il peut être monté à rotation autour de l'axe "A" de calage, par exemple en étant fixé au bol 42. Dans tous les cas, le couple de rappel est transmis au pied 14 par l'intermédiaire du bol 42.

Comme expliqué précédemment, le bol 42 et le pied 14 d'aube 10 sont solidarisés en rotation par l'intermédiaire de l'extrémité 28 inférieure libre du pied 14. En cas de rupture de l'extrémité 28 inférieure libre du pied 14 de l'aube 10, par exemple le long de la ligne brisée indiquée par la référence "R", bien qu'encore retenue axialement dans le bol 42 par coopération entre la bague 62 d'immobilisation et le bulbe 32, l'aube 10 serait alors libre de tourner autour de l'axe "A" de calage par rapport au bol 42. Dans un tel cas, ni le couple fourni l'actionneur, ni le couple de rappel fourni par le contrepoids ne pourraient être transmis à l'aube 10 qui pourrait tourner sans contrôle dans le bol 42. Bien que la probabilité de réalisation d'un tel évènement soit très faible, il est néanmoins préférable de prévoir une solution de secours pour rétablir la maîtrise de l'orientation de l'aube 10 autour de son axe "A" de calage.

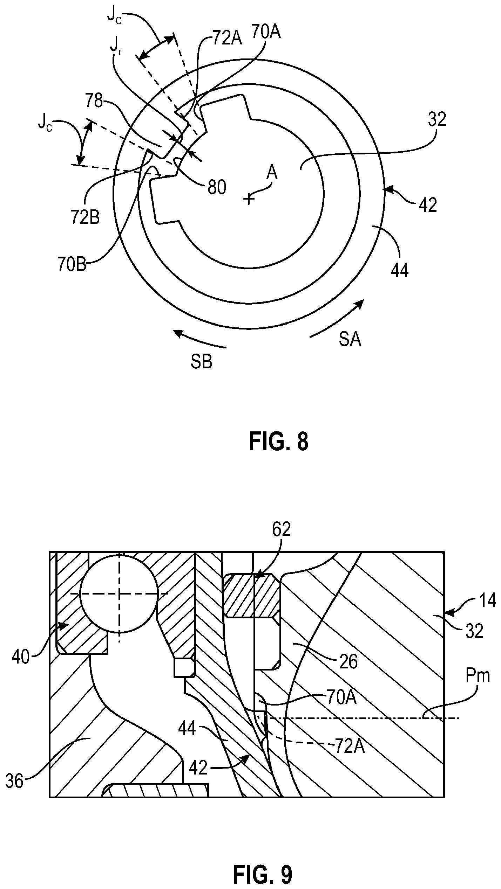

Pour résoudre ce problème, l'invention propose de prévoir un chemin secondaire pour la transmission du couple entre le bol 42 et le pied 14 en cas de rupture de l'extrémité 28 inférieure libre. Deux variantes de réalisation du principe de l'invention sont illustrées aux figures 7 et 8.

A cet effet, le pied 14 de l'aube 10 comporte au moins une première face 70A radiale de limitation qui est destinée à coopérer avec au moins une première face 72A radiale de butée associée du bol 42 pour limiter la rotation de l'aube 10 dans un premier sens "SA" autour de l'axe "A" de calage par rapport au bol 42 en cas de rupture de l'extrémité 28 inférieure libre du pied 14.

Le premier sens "SA" de rotation correspond au sens de rotation de l'aube 10 pour revenir vers son angle de calage en drapeau lorsque les aubes 10 de l'hélice occupent un angle de calage pour générer une poussée pour faire avancer l'aéronef. Le couple de rappel engendré par le dispositif de sécurité tend ainsi à faire tourner l'aube 10 dans le premier sens "SA" de rotation.

Il arrive cependant qu'un couple aérodynamique soit appliqué à l'aube 10 par l'écoulement de l'air. Le couple total susceptible de s'appliquer à l'aube 10, c'est-à-dire la somme du couple de rappel et du couple aérodynamique, peut aussi tendre à faire tourner l'aube 10 dans un deuxième sens "SB", opposé audit premier sens "SA".

A cet égard, il est préférable que le pied 14 de l'aube 10 comporte au moins une deuxième face 70B radiale de limitation qui est destinée à coopérer avec au moins une deuxième face 72B radiale de butée associée du bol 42 pour limiter la rotation de l'aube 10 dans le deuxième sens "SB" autour de l'axe "A" de calage par rapport au bol 42 en cas de rupture de l'extrémité 28 inférieure libre du pied 14.

Un espace "Jc" angulaire est réservé circonférentiellement entre chaque face 70A, 70B radiale de limitation et sa face 72A, 72B de butée associée lorsque l'aube 10 est liée en rotation au bol 42 par l'intermédiaire de son extrémité 28 inférieure libre.

L'espace "Jc" angulaire est choisi de manière à permettre un montage aisé entre le pied 14 et le bol 42.

En outre, l'espace "Jc" angulaire permet de garantir que lorsque le pied 14 est lié en rotation avec le bol 42 par son extrémité 28 inférieure libre, aucun effort de transitera par les faces 70 radiales et les faces 72A, 72B de butée.

L'espace "Jc" angulaire permet aussi de détecter aisément un problème de rupture de l'extrémité 28 inférieure libre du pied 14 car on peut alors constater que l'aube 10 présente un débattement en rotation autour de son axe "A" de calage par rapport au bol 42 simplement en exerçant un effort manuel pour faire tourner l'aube 10.

Cependant, cet espace "Jc" angulaire doit rester assez faible pour limiter le balourd aérodynamique et les vibrations en fonctionnement de l'hélice.

L'espace "Jc" angulaire est de préférence compris entre 2° et 10°. Il est de préférence égal à 5°.

Comme cela est illustré à la figure 3, et plus en détails à la figure 9, pour bénéficier d'un meilleurs bras de levier, les faces 70A, 70B de limitation sont ici agencées sensiblement au niveau du plan "Pm" auquel le bulbe 32 présente une dimension radiale maximale. Les faces 72A, 72B de butée et les faces 70A, 70B de limitation sont ici agencées axialement au-dessous de la bague 62 d'immobilisation.

Dans les modes de réalisation représentés aux figures 3 et 6, le pied 14 comprend pour l'essentiel deux parties, à savoir le corps 24 et un fût 26 annulaire qui s'étend autour du corps 24 et d'un axe "A" de calage de l'aube 10. Le fût 26 annulaire est fixé au corps 24.

Le fût 26 est de préférence indépendant du système 34 de calage angulaire.

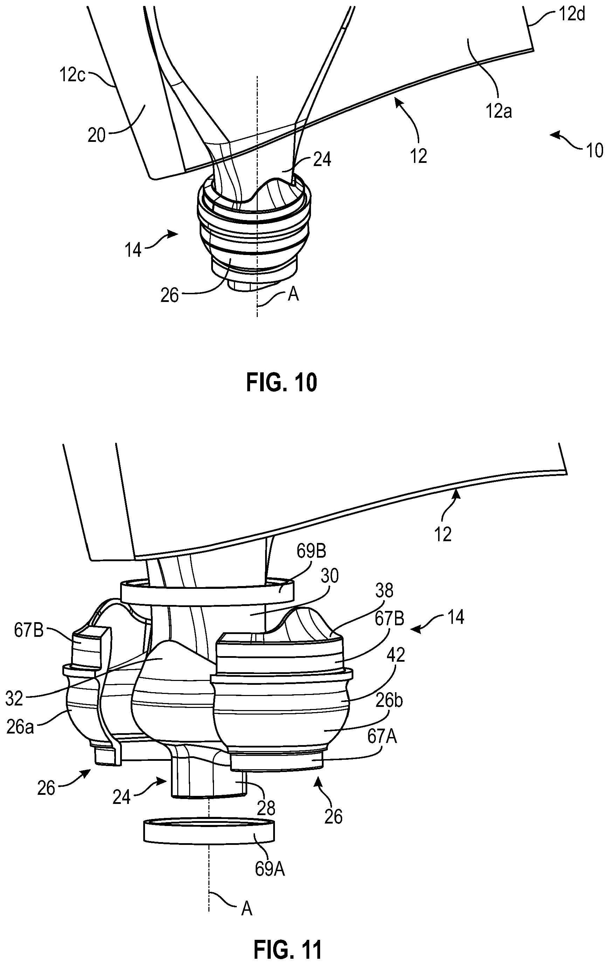

Comme illustré plus en détails aux figures 10 et 11, le fût 26 est réalisé en deux demi-coques 26a, 26b, comme cela est visible à la figure 3, qui sont rapportées et fixées sur le corps 24, par exemple l'un du côté de l'intrados 12a de la pale 12 et l'autre du côté de l'extrados 12b de la pale 12. Les demi-coques 26a, 26b sont ainsi jointes au niveau d'un plan de joint qui passe par l'axe "A" de calage et qui s'étend sensiblement parallèlement à une corde de la pale 12.

Le fût 26 est avantageusement fixé sur le corps 24, de préférence par collage. La colle s'étend entre le fût 26 et le corps 24, tout autour de l'axe "A" de calage.

Le fût 26 est de préférence métallique (en acier, titane ou alliage de titane comme le TA6V). La colle est par exemple une colle époxy chargée en nodules thermoplastiques ou élastomères ou renforcée avec un tissu. Ce procédé d'assemblage par collage est particulièrement adapté du fait de la grande surface de contact entre la cavité du fût 26 et le corps 24 qui peut être composite.

Comme cela est visible aux figures 3 et 6, le fût 26 recouvre et épouse au moins une partie du bulbe 32 et de l'échasse 30, et a une forme complémentaire en section du bulbe 32, au niveau de la du plan médian "Pm", et de l'échasse 30, au niveau de la section haute "Ph".

Le fût 26 comprend deux surfaces 67A, 67B cylindriques, de montage de bagues 69A, 69B de frettage. Les bagues de frettage permettent de maintenir les demi-coques 26a, 26b serrées l'une contre l'autre et sur le corps 24. Les bagues 69A, 69B de frettage s'étendent autour de l'axe "A" de calage.

Chaque face 70A, 70B de limitation est ici formée en une pièce avec le fût 26.

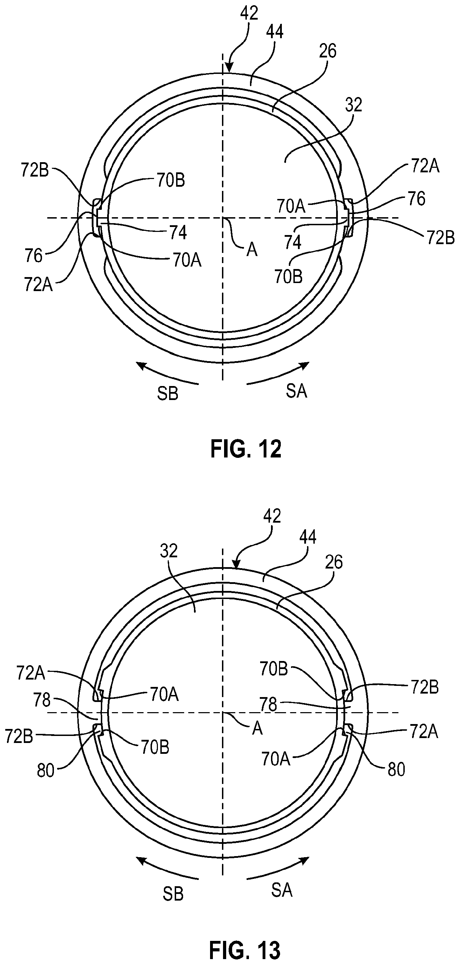

Selon un premier mode de réalisation de l'invention dont le principe général est représenté à la figure 7, et dont l'application à un pied 14 comportant un fût 26 est illustré à la figure 12, le pied 14 est ici muni d'un doigt 74 de limitation qui fait saillie radialement vers l'extérieur jusqu'à une extrémité externe libre. Le doigt 74 de limitation est délimité dans un sens par une première face 70A de limitation et dans l'autre sens par une deuxième face 70B de limitation. La première face 70A de limitation et la deuxième face 70B de limitation sont ainsi tournées dans deux directions opposées sur le doigt 74 commun de limitation. Le doigt 74 de limitation fait ici saillie par rapport à une face externe du fût 26.

Avantageusement, comme représenté à la figure 12, le pied 14 est muni de plusieurs doigts 74 de limitation pour répartir les efforts autour de l'axe "A" de calage. Les doigts 74 de limitation sont par exemple agencés régulièrement autour de l'axe "A" de calage.

Le pied 14 est ici muni de deux doigts 74 de limitation agencés en opposition par rapport à l'axe "A" de calage.

Chaque doigt 74 de limitation est reçu dans une encoche 76 de butée associée réalisée dans la face interne de la paroi 44 annulaire du bol 42. L'encoche 76 de butée est limitée circonférentiellement dans le premier sens "SA" par une première face 72A de butée, qui est destinée à limiter la rotation de l'aube 10 dans le premier sens "SA" par contact avec la première face 70A de limitation associé, et dans le deuxième sens "SB" par une deuxième face 72B de butée qui est destinée à limiter la rotation de l'aube 10 dans le deuxième sens "SB" par contact avec la deuxième face 70B de limitation associé.

Comme expliqué précédemment, le doigt 74 de limitation est reçu avec un débattement circonférentiel entre les deux faces 72A, 72B de butée de manière qu'un espace "Jc" angulaire soit réservé circonférentiellement entre chaque face 70A, 70B de limitation du doigt 74 de limitation et la face 72A, 72B de butée associée de l'encoche 76 de butée lorsque le pied 14 de l'aube 10 est liée en rotation avec le bol 42 par son extrémité 28 inférieure libre. Plus particulièrement, le doigt 74 de limitation est alors agencé sensiblement à équidistance des deux faces 72A, 72B de butée de l'encoche 76 de butée associée.

Un espace "Jr" radial est aussi réservé entre l'extrémité externe libre du doigt 74 de limitation et le fond de l'encoche 76 de butée formé dans la face interne de la paroi 44 annulaire du bol 42. Cet espace "Jr" radial forme un jeu qui permet de faciliter le montage du pied 14 dans le bol 42.

Par ailleurs, pour permettre l'insertion axiale du pied 14 dans le bol 42, l'encoche 76 de butée est ouverte axialement vers le haut de manière à recevoir le doigt 74 de limitation axialement.

Un deuxième mode de réalisation de l'invention, dont le principe général est représenté à la figure 8, et dont l'application à un pied 14 comportant un fût 26 est illustré à la figure 13, est une inversion mécanique du premier mode de réalisation. Ce sont ici les faces 72A, 72B de butée qui sont agencées sur un doigt 78 de butée tandis que les faces 70A, 70B de limitations délimitent une encoche 80 de limitation réalisée dans le pied 14.

La paroi 44 annulaire du bol 42 est ici munie d'un doigt 78 de butée qui fait saillie radialement vers l'intérieur jusqu'à une extrémité interne libre. Le doigt 78 de butée est délimité dans un sens par une première face 72A de butée et dans l'autre sens par une deuxième face 72B de butée. La première face 72A de butée et la deuxième face 72B de butée sont ainsi tournées dans deux directions opposées sur le doigt 78 commun de butée. Le doigt 78 de butée fait ici saillie par rapport à une face interne de la paroi 44 annulaire du bol 42.

Avantageusement, comme cela est illustré à la figure 13, le bol 42 est muni de plusieurs doigts 78 de butée pour répartir les efforts autour de l'axe "A" de calage. Les doigts 78 de butée sont par exemple agencés régulièrement autour de l'axe "A" de calage.

Le bol 42 est ici muni de deux doigts 78 de butée agencés en opposition par rapport à l'axe "A" de calage.

Chaque doigt 78 de butée est reçu dans une encoche 80 de limitation associée réalisée dans la face externe du pied 14, ici dans la face externe du fût 26. L'encoche 80 de limitation est limitée circonférentiellement dans le premier sens "SA" par une première face 70A de limitation, qui est destinée à limiter la rotation de l'aube 10 dans le premier sens "SA" par contact avec la première face 72A de butée associé, et dans le deuxième sens "SB" par une deuxième face 70B de limitation qui est destinée à limiter la rotation de l'aube 10 dans le deuxième sens "SB" par contact avec la deuxième face 72B de butée associé.

Comme expliqué précédemment, le doigt 78 de butée est reçu avec un débattement circonférentiel entre les deux faces 72A, 72B de butée de manière qu'un espace "Jc" angulaire soit réservé circonférentiellement entre chaque face 72A, 72B de butée du doigt 78 de butée et la face 70A, 70B de limitation associée de l'encoche 80 de limitation lorsque le pied 14 de l'aube 10 est liée en rotation avec le bol 42 par son extrémité 28 inférieure libre. Plus particulièrement, le doigt 78 de butée est alors agencé sensiblement à équidistance des deux faces 70A, 70B de limitation de l'encoche 80 de limitation associée.

Un espace "Jr" radial est aussi réservé entre l'extrémité interne libre du doigt 78 de butée et le fond de l'encoche 80 de limitation formé dans la face externe du pied 14. Cet espace radial forme un jeu qui permet de faciliter le montage du pied 14 dans le bol 42.

Par ailleurs, pour permettre l'insertion axiale du pied 14 dans le bol 42, l'encoche 80 de limitation est ouverte axialement vers le bas de manière à recevoir le doigt 78 de butée axialement.

## Revendications

1. Ensemble comportant une aube (10) d'hélice et un système (34) de calage angulaire de l'aube (10) autour d'un axe (A) de calage, pour une turbomachine d'aéronef, l'aube (10) présentant un pied (14) s'étendant depuis une extrémité supérieure liée à une pale (12) de l'aube (10) jusqu'à une extrémité (28) inférieure libre, le système (34) de calage angulaire de l'aube (10) comportant un bol (42) qui est délimité radialement par une paroi (44) annulaire s'étendant autour de l'axe (A) de calage, le bol (42) comportant une paroi (46) de fond et une ouverture (48) supérieure par laquelle le pied (14) est destiné à être inséré axialement dans le bol (42), l'extrémité (28) inférieure libre du pied (14) étant emboîtée axialement dans un logement (56) complémentaire de la paroi (46) de fond pour lier en rotation autour de l'axe (A) de calage le bol (42) et l'aube (10),
**caractérisé en ce que** le pied (14) de l'aube (10) comporte au moins une première face (70A) radiale de limitation qui est destinée à coopérer avec au moins une première face (72A) radiale de butée associée du bol (42) pour limiter la rotation de l'aube (10) dans un premier sens (sA) autour de l'axe (A) de calage par rapport au bol (42) en cas de rupture de l'extrémité (28) inférieure du pied.

2. Ensemble selon la revendication précédente, **caractérisé en ce que** le pied (14) de l'aube comporte au moins une deuxième face (70B) radiale de limitation qui est destinée à coopérer avec au moins une deuxième face (72B) radiale de butée associée du bol (42) pour limiter la rotation de l'aube (10) dans un deuxième sens (sB) autour de l'axe (A) de calage par rapport au bol (42) en cas de rupture de l'extrémité (28) inférieure du pied.

3. Ensemble selon l'une quelconque des revendications précédentes, **caractérisé en ce qu'**un espace (Jc) angulaire est réservé entre chaque face (70A, 70B) radiale de limitation et sa face (72A, 72B) de butée associée lorsque l'aube (10) est liée en rotation au bol (42) par l'intermédiaire de son extrémité (28) inférieure libre.

4. Ensemble selon la revendication précédente, **caractérisé en ce que** l'espace (Jc) angulaire est compris entre 2° et 10°, de préférence l'espace (Jc) angulaire est égal à 5°.

5. Ensemble selon l'une quelconque des revendications précédentes, **caractérisé en ce qu'**il comporte des moyens de rétention pour fixer axialement le pied (14) dans le bol (42).

6. Ensemble selon la revendication précédente, **caractérisé en ce que** le pied (14) présente un tronçon renflé, appelé "bulbe" (32), qui est agencé axialement entre la pale (12) et l'extrémité (28) inférieure libre, le système (34) de calage comportant une bague (52) d'immobilisation annulaire qui est configurée pour être montée à l'intérieur du bol (42) et pour coopérer respectivement avec le bulbe (32) et la paroi (44) annulaire du bol (42) afin de solidariser axialement le pied (14) avec le bol (42).

7. Ensemble selon la revendication précédente, **caractérisé en ce que** les faces (72A, 72B) de butée et les faces (70A, 70B) de limitation sont agencées axialement au-dessous de la bague (52) d'immobilisation.

8. Ensemble selon l'une quelconque des revendications 6 ou 7, **caractérisé en ce que** les faces (70A, 70B) de limitation sont agencées sensiblement au niveau auquel le bulbe (32) présente des dimensions radiales maximales.

9. Ensemble selon l'une quelconque des revendications précédentes, **caractérisé en ce que** le pied (14) comporte un corps (24) logé dans un fût (26) annulaire préalablement à son insertion dans le bol (42), chaque face (70A, 70B) de limitation étant formée en une pièce avec le fût (26).

10. Ensemble selon l'une quelconque des revendications 2 à 9, **caractérisé en ce que** l'au moins une première face (70A) de limitation et l'au moins une deuxième face (70B) de limitation sont agencées sur un doigt (74) commun de limitation qui fait saillie radialement vers l'extérieur par rapport au pied.

11. Ensemble selon la revendication précédente, **caractérisé en ce que** le doigt (74) de limitation est reçu dans une encoche (76) de butée associée du bol (42) qui est délimitée circonférentiellement par une première face (72A) de butée et par une deuxième face (72B) de butée.

12. Ensemble selon l'une quelconque des revendications 10 ou 11, **caractérisé en ce qu'**un espace (Jr) radial est réservé entre le doigt (74) de limitation et la face interne de la paroi (44) annulaire du bol (42).

13. Ensemble selon l'une quelconque des revendications 2 à 9, **caractérisé en ce que** l'au moins une première face (72A) de butée et l'au moins une deuxième face (72B) de butée sont agencées en opposition sur un doigt (78) commun de butée qui fait saillie radialement vers l'intérieur par rapport à la paroi (44) annulaire du bol (42).

14. Ensemble selon la revendication précédente, **caractérisé en ce que** le doigt (78) de butée est reçu dans une encoche (80) de limitation associée du pied (14) qui est délimitée circonférentiellement par une première face (70A) de limitation et par une deuxième face (70B) de limitation.

15. Ensemble selon la revendication précédente, **caractérisé en ce qu'**un espace (Jr) radial est réservé entre le doigt (78) de butée et le pied (14).

## Patentansprüche

1. Einheit, die eine Propellerschaufel (10) und ein System (34) zur Winkelverstellung der Schaufel (10) um eine Verstellachse (A) herum für ein Flugzeugturbotriebwerk umfasst, wobei die Schaufel (10) einen Fuß (14) aufweist, der sich aus einem oberen Ende, das mit einer Blatt (12) der Schaufel (10) verbunden ist, bis zu einem freien unteren Ende (28) erstreckt, wobei das System (34) zur Winkelverstellung der Schaufel (10) eine Schale (42) umfasst, die radial durch eine ringförmige Wand (44) begrenzt wird, die sich um die Verstellachse (A) herum erstreckt, wobei die Schale (42) eine Bodenwand (46) und eine obere Öffnung (48) umfasst, durch die hindurch der Fuß (14) bestimmt ist, axial in die Schale (42) eingeführt zu werden, wobei das freie untere Ende (28) des Fußes (14) axial in eine ergänzende Aufnahme (56) der Bodenwand (46) eingerastet ist, um die Schale (42) und die Schaufel (10) um die Verstellachse (A) herum drehend zu verbinden,
**dadurch gekennzeichnet, dass** der Fuß (14) der Schaufel (10) mindestens eine erste radiale Begrenzungsfläche (70A) umfasst, die dazu bestimmt ist, mit mindestens einer ersten radialen Anschlagfläche (72A) zusammenzuwirken, die der Schale (42) zugeordnet ist, um die Drehung der Schaufel (10) in einer ersten Richtung (sA) um die Verstellachse (A) herum in Bezug auf die Schale (42) im Falle eines Bruches des unteren Endes (28) des Fußes zu begrenzen.

2. Einheit nach dem vorstehenden Anspruch, **dadurch gekennzeichnet, dass** der Fuß (14) der Schaufel mindestens eine zweite radiale Begrenzungsfläche (70B) umfasst, die dazu bestimmt ist, mit mindestens einer zweiten radialen Anschlagfläche (72B) zusammenzuwirken, die der Schale (42) zugeordnet ist, um die Drehung der Schaufel (10) in einer zweiten Richtung (sB) um die Verstellachse (A) herum in Bezug auf die Schale (42) im Falle eines Bruches des unteren Endes (28) des Fußes zu begrenzen.

3. Einheit nach einem der vorstehenden Ansprüche, **dadurch gekennzeichnet, dass** ein Winkelraum (Jc) zwischen jeder radialen Begrenzungsfläche (70A, 70B) und ihrer zugeordneten Anschlagfläche (72A, 72B) vorbehalten ist, wenn die Schaufel (10) mit der Schale (42) an ihrem freien unteren Ende (28) drehend verbunden ist.

4. Einheit nach dem vorstehenden Anspruch, **dadurch gekennzeichnet, dass** der Winkelraum (Jc) zwischen 2° und 10° liegt, der Winkelraum (Jc) vorzugsweise gleich 5° ist.

5. Einheit nach einem der vorstehenden Ansprüche, **dadurch gekennzeichnet, dass** sie Rückhaltemittel zum axialen Fixieren des Fußes (14) in der Schale (42) umfasst.

6. Einheit nach dem vorstehenden Anspruch, **dadurch gekennzeichnet, dass** der Fuß (14) ein "Knolle" genanntes wulstiges Teilstück (32) aufweist, das axial zwischen dem Blatt (12) und dem freien unteren Ende (28) angeordnet ist, wobei das Verstellsystem (34) einen kreisförmigen Feststellring (52) umfasst, der konfiguriert ist, um im Inneren der Schale (42) montiert zu werden, und um jeweils mit der Knolle (32) und der ringförmigen Wand (44) der Schale (42) zusammenzuwirken, um den Fuß (14) axial fest mit der Schale (42) zu verbinden.

7. Einheit nach dem vorstehenden Anspruch, **dadurch gekennzeichnet, dass** die Anschlagflächen (72A, 72B) und die Begrenzungsflächen (70A, 70B) axial oberhalb des Feststellrings (52) angeordnet sind.

8. Einheit nach einem der Ansprüche 6 oder 7, **dadurch gekennzeichnet, dass** die Begrenzungsflächen (70A, 70B) im Wesentlichen in dem Bereich angeordnet sind, in dem die Knolle (32) maximale radiale Abmessungen aufweist.

9. Einheit nach einem der vorstehenden Ansprüche, **dadurch gekennzeichnet, dass** der Fuß (14) einen Körper (24) umfasst, der vor seinem Einführen in die Schale (42) in einem ringförmigen Schaft (26) untergebracht wird, wobei jede Begrenzungsfläche (70A, 70B) in einem Stück mit dem Schaft (26) gebildet ist.

10. Einheit nach einem der Ansprüche 2 bis 9, **dadurch gekennzeichnet, dass** die mindestens eine erste Begrenzungsfläche (70A) und die mindestens eine zweite Begrenzungsfläche (70B) auf einem gemeinsamen Begrenzungsfinger (74) angeordnet sind, der in Bezug auf den Fuß radial nach außen übersteht.

11. Einheit nach dem vorstehenden Anspruch, **dadurch gekennzeichnet, dass** der Begrenzungsfinger (74) in einer Anschlagkerbe (76) aufgenommen ist, die der Schale (42) zugeordnet ist, die umfänglich durch eine erste Anschlagfläche (72A) und durch eine zweite Anschlagfläche (72B) begrenzt ist.

12. Einheit nach einem der Ansprüche 10 oder 11, **dadurch gekennzeichnet, dass** ein radialer Raum (Jr) zwischen dem Begrenzungsfinger (74) und der Innenfläche der ringförmigen Wand (44) der Schale (42) vorbehalten ist.

13. Einheit nach einem der Ansprüche 2 bis 9, **dadurch gekennzeichnet, dass** die mindestens eine erste Anschlagfläche (72A) und die mindestens eine zweite Anschlagfläche (72B) entgegengesetzt auf einem gemeinsamen Anschlagfinger (78) angeordnet sind, der in Bezug auf die ringförmige Wand (44) der Schale (42) nach innen übersteht.

14. Einheit nach dem vorstehenden Anspruch, **dadurch gekennzeichnet, dass** der Anschlagfinger (78) in einer Begrenzungskerbe (80) aufgenommen ist, die dem Fuß (14) zugeordnet ist, die umfänglich durch eine erste Begrenzungsfläche (70A) und durch eine zweite Begrenzungsfläche (70B) begrenzt ist.

15. Einheit nach dem vorstehenden Anspruch, **dadurch gekennzeichnet, dass** ein radialer Raum (Jr) zwischen dem Anschlagfinger (78) und dem Fuß (14) vorbehalten ist.

## Claims

1. An assembly comprising a propeller vane (10) and a system (34) for setting the pitch of the vane (10) about a pitch setting axis (A), for an aircraft turbine engine, the vane (10) having a root (14) extending from an upper end connected to a blade (12) of the vane (10) to a free lower end (28), the system (34) for setting the pitch of the vane (10) comprising a cup (42) which is radially delimited by an annular wall (44) extending around the pitch setting axis (A), the cup (42) comprising a bottom wall (46) and an upper opening (48) through which the root (14) is intended to be inserted axially into the cup (42), the free lower end (28) of the root (14) being nested axially into a housing (56) complementary of the bottom wall (46) in order to connect the cup (42) and the vane (10) in rotation about the pitch setting axis (A),
**characterised in that** the root (14) of the vane (10) comprises at least one first radial limiting face (70A) which is intended to cooperate with at least one associated first radial stop face (72A) of the cup (42) in order to limit the rotation of the vane (10) in a first orientation (sA) about the pitch setting axis (A) with respect to the cup (42) in the event of failure of the lower end (28) of the root.

2. The assembly according to the preceding claim, **characterised in that** the root (14) of the vane comprises at least one second radial limiting face (70B) which is intended to cooperate with at least one associated second radial stop face (72B) of the cup (42) in order to limit the rotation of the vane (10) in a second orientation (sB) about the pitch setting axis (A) with respect to the cup (42) in the event of failure of the lower end (28) of the root.

3. The assembly according to any one of the preceding claims, **characterised in that** an angular space (Jc) is reserved between each radial limiting face (70A, 70B) and its associated stop face (72A, 72B) when the vane (10) is connected in rotation to the cup (42) by means of its free lower end (28).

4. The assembly according to the preceding claim, **characterised in that** the angular space (Jc) is between 2° and 10°, preferably the angular space (Jc) is equal to 5°.

5. The assembly according to any of the preceding claims, **characterised in that** it comprises retention means for axially attaching the root (14) in the cup (42).

6. The assembly according to the preceding claim, **characterised in that** the root (14) has a bulged stretch, referred to as "bulb" (32), which is arranged axially between the blade (12) and the free lower end (28), the pitch setting system (34) comprising an annular immobilisation ring (52) which is configured to be mounted inside the cup (42) and to cooperate respectively with the bulb (32) and the annular wall (44) of the cup (42) in order to secure the root (14) axially to the cup (42).

7. The assembly according to the preceding claim, **characterised in that** the stop faces (72A, 72B) and the limiting faces (70A, 70B) are arranged axially below the immobilisation ring (52).

8. The assembly according to any of claims 6 or 7, **characterised in that** the limiting faces (70A, 70B) are arranged substantially at the level at which the bulb (32) has maximum radial dimensions.

9. The assembly according to any one of the preceding claims, **characterised in that** the root (14) comprises a body (24) housed in an annular barrel (26) prior to its insertion into the cup (42), each limiting face (70A, 70B) being formed in one part with the barrel (26).

10. The assembly according to any one of claims 2 to 9, **characterised in that** the at least one first limiting face (70A) and the at least one second limiting face (70B) are arranged on a common limiting finger (74) which projects radially outwards relative to the root.

11. The assembly according to the preceding claim, **characterised in that** the limiting finger (74) is received in an associated stop notch (76) of the cup (42) which is circumferentially delimited by a first stop face (72A) and by a second stop face (72B).

12. The assembly according to any one of claims 10 or 11, **characterised in that** a radial space (Jr) is reserved between the limiting finger (74) and the internal face of the annular wall (44) of the cup (42).

13. The assembly according to any one of claims 2 to 9, **characterised in that** the at least one first stop face (72A) and the at least one second stop face (72B) are arranged in opposition on a common stop finger (78) which projects radially inwards relative to the annular wall (44) of the cup (42).

14. The assembly according to the preceding claim, **characterised in that** the stop finger (78) is received in an associated limiting notch (80) of the root (14) which is circumferentially delimited by a first limiting face (70A) and by a second limiting face (70B).

15. The assembly according to the preceding claim, **characterised in that** a radial space (Jr) is reserved between the stop finger (78) and the root (14).
